# EUROPEAN PATENT APPLICATION

(11) **EP 4 645 517 A1**
(43) Date of publication of application: **05.11.2025**
(21) Application number: 24826205.7
(22) Date of filing: 17.06.2024
(51) Int. Cl.: H01M 10/42, H01M 4/04, G01N 21/88, B26D 1/24, B26D 7/27, B65H 35/02

(54) **SLITTING DEVICE, SECONDARY BATTERY MANUFACTURING SYSTEM COMPRISING SAME, AND METHOD FOR MANUFACTURING SECONDARY BATTERY**

(30) Priority: 19.06.2023 KR 20230078340
(71) Applicant: LG Energy Solution, Ltd., Seoul 07335 (KR)
(72) Inventor: KANG, Kyu Taek, Daejeon 34122 (KR); KIM, Min Su, Daejeon 34122 (KR); PARK, Jong Seok, Daejeon 34122 (KR); HAN, Yoon Ju, Daejeon 34122 (KR); BAE, Min Woo, Daejeon 34122 (KR); LEE, Dong Yeop, Daejeon 34122 (KR); HUH, Seung, Daejeon 34122 (KR); PARK, Jae Wan, Daejeon 34122 (KR)
(74) Representative: BCKIP Part mbB
(86) International application number: PCT/KR2024/008285
(87) International publication number: WO 2024/262888

(57) **Abstract**

According to exemplary embodiments, provided is a method for providing a secondary battery. The method comprises: a step for applying an electrode slurry so that a plurality of holding part lanes are formed on a first electrode sheet unwound from a first electrode roll a step for inspecting the first electrode sheet to collect inspection data; a step for forming an NG mark on the first electrode sheet on the basis of the inspection data, and winding the first electrode sheet into a second electrode roll, wherein the NG mark indicates the horizontal position of a defect on the first electrode sheet.

## Description

### [Technical Field]

The present disclosure relates to a slitting device, a secondary battery manufacturing system including the same, and a secondary battery manufacturing method. The present application claims the benefit of priority based on Korean Patent Application No. 10-2023-0078340, filed on June 19, 2023, and the entire contents of the Korean patent application is incorporated herein by reference.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulation material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of the battery cell.

### [Disclosure]

### [Technical Problem]

The present invention is directed to providing a system and method for manufacturing a secondary battery with improved yield and productivity.

### [Technical Solution]

Embodiments of the present invention provide a secondary battery manufacturing method. The secondary battery manufacturing method includes coating a first electrode sheet unwound from a first electrode roll with an electrode slurry to form a plurality of coated lanes, inspecting the first electrode sheet to collect inspection data, forming an NG mark on the first electrode sheet based on the inspection data, and winding the first electrode sheet into a second electrode roll, in which the NG mark indicates a position of a defect on the first electrode sheet in a transverse direction.

The NG mark may be two-dimensional (2D) barcode.

The NG mark may include information about bits indicating coated lanes including the defect among the plurality of coated lanes and bits indicating a sequence in which the NG mark is formed.

The first electrode sheet may be a positive electrode current collector, the electrode slurry may be a positive electrode active material, the NG mark may be formed based on inspection of an insulation overlay of the first electrode sheet, and the insulation overlay may be an overlapping width of the positive electrode active material of the electrode slurry and an insulation layer applied to the positive electrode active material.

The first electrode sheet may be a negative electrode current collector, the electrode slurry may be a negative electrode active material, the NG mark may be formed based on inspection of a slide of the first electrode sheet, and the slide may be a slope of a profile of the negative electrode active material on an edge of each of the plurality of coated lanes.

The secondary battery manufacturing method may further include unwinding a second electrode sheet from the second electrode roll, sensing the NG mark on the second electrode sheet, and winding the second electrode sheet into a third electrode roll.

The secondary battery manufacturing method may further include, when all of the plurality of coated lanes of a first portion of the second electrode sheet include the defect, scrapping the first portion of the second electrode sheet.

The secondary battery manufacturing method may further include, when some of the plurality of coated lanes of a second portion of the second electrode sheet are normal, performing a roll pressing process on the second portion of the second electrode sheet.

The secondary battery manufacturing method may further include unwinding a third electrode sheet from the third electrode roll, sensing the NG mark on the third electrode sheet, cutting the third electrode sheet into first and second separate electrode sheets, attaching an NG tag to the first and second separate electrode sheets, and winding the first and second separate electrode sheets into fourth electrode rolls.

The secondary battery manufacturing method may further include loading one of the fourth electrode rolls on a winding device, unwinding a fourth electrode sheet from one of the fourth electrode rolls, and sensing an NG tag on the fourth electrode sheet to generate an NG sensing signal.

The secondary battery manufacturing method may further include scrapping a portion of the fourth electrode sheet based on the NG sensing signal.

Example embodiments provide a slitting device. The slitting device includes an unwinder configured to unwind an electrode sheet from an electrode roll, an NG mark sensor configured to inspect an NG mark on the electrode sheet, a slitting knife configured to cut the electrode sheet into a first separate electrode sheet including a first coated lane and a second separate electrode sheet including a second coated lane, and NG tag attachers configured to attach an NG tag to the first and second separate electrode sheets.

The slitting device may further include a controller configured to control the NG tag attachers, and the controller may be configured to communicate directly with the NG mark sensor.

The NG mark sensor may include a sensing part configured to sense the NG mark to generate an NG mark sensing signal, and a processor configured to collect NG mark sensing data based on the NG mark sensing signal.

The controller may be configured to control the NG tag attachers based on the NG mark sensing data.

### [Advantageous Effects]

According to example embodiments of the present invention, coated lanes including a defect among a plurality of coated lanes of an electrode sheet can be selectively scrapped. Accordingly, the productivity and yield of a secondary battery manufacturing system and method can be improved.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### [Brief Description of the Drawings]

FIG. 1 illustrates a secondary battery manufacturing system according to example embodiments.
FIG. 2 illustrates a coating device according to example embodiments.
FIG. 3 is a diagram illustrating the formation of NG marks by markers.
FIG. 4 illustrates a roll pressing device according to example embodiments.
FIG. 5 illustrates a slitting device according to example embodiments.
FIG. 6 illustrates a winding device according to example embodiments.
FIG. 7 is a flowchart of a secondary battery manufacturing method according to example embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

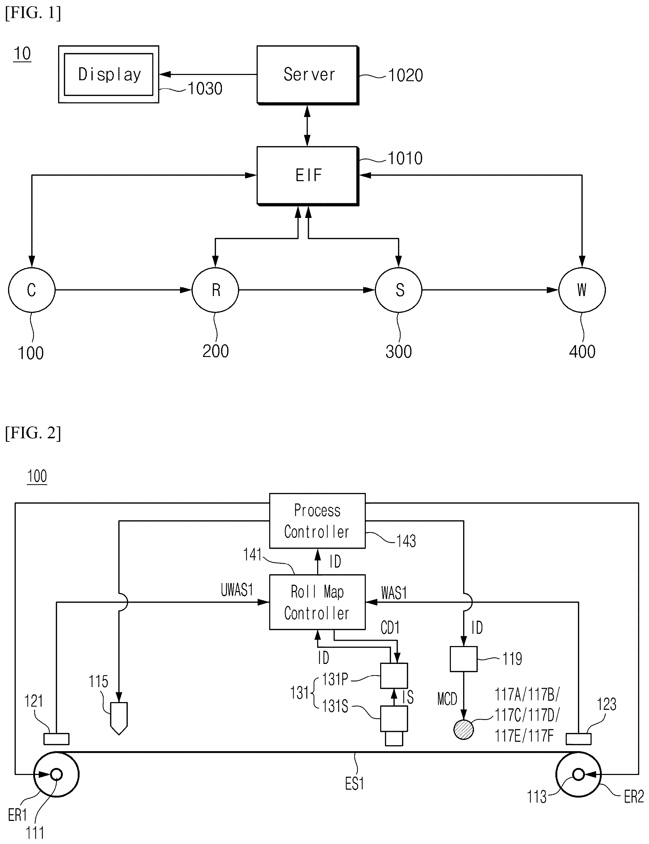

FIG. 1 illustrates a secondary battery manufacturing system 10 according to example embodiments.

Referring to FIG. 1, the secondary battery manufacturing system 10 may include a coating device 100, a roll pressing device 200, a slitting device 300, a winding device 400, an equipment interface (EIF) 1010, a server 1020, and a display device 1030.

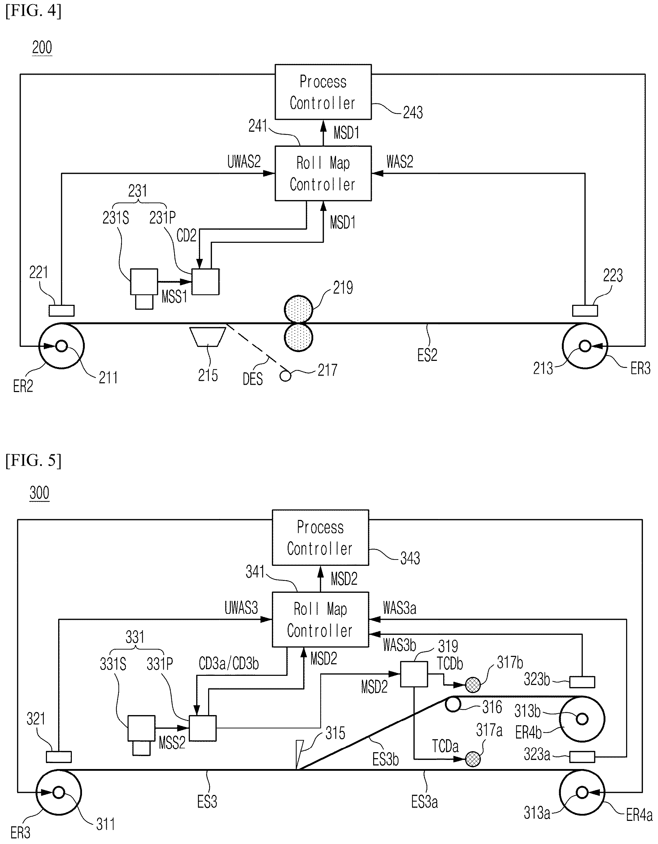

The secondary battery manufacturing system 10 may be configured to manufacture a battery cell (e.g., a cylindrical battery cell) by performing a series of roll-to-roll processes. An electrode sheet unwound from an input electrode roll may be processed by one of a die coater 123 (see FIG. 2) of the coating device 100, press rolls 219 (see FIG. 4) of the roll pressing device 200, and a slitting knife 315 (see FIG. 5) of the slitting device 300, and the processed electrode sheet may be wound into an electrode roll. Accordingly, each of operations performed by the coating device 100, the roll pressing device 200, and the slitting device 300 to produce electrodes of a secondary battery may be referred to as a roll-to-roll process. The winding device 400 may wind a positive electrode sheet unwound from a positive electrode roll, a negative electrode sheet unwound from a negative electrode roll, and separator sheets unwound from separator rolls together. Accordingly, an operation performed by the winding device 400 may also be referred to as a roll-to-roll process.

The coating device 100 may perform the coating process on the electrode sheet. In the coating process, an electrode sheet may be coated with an electrode slurry. The electrode slurry may include an active material, a conductive agent, a binder, and a solvent. The electrode slurry may be prepared by dissolving the active material, the conductive agent, the binder, etc. in the solvent.

The roll pressing device 200 may perform the roll press process on the electrode sheet. In the roll press process, the electrode sheet coated with the electrode slurry may be passed through between the pressing rolls 219 (see FIG. 4). Through the roll press process, a surface of the electrode sheet may be planarized, and a binding force between the active material of the electrode sheet and a current collector may be improved.

The slitting device 300 may perform the slitting process on the electrode sheet. The electrode sheet may be divided into a plurality of electrode sheets by the slitting process.

The winding device 400 may provide an electrode assembly of a cylindrical battery cell by winding a positive electrode sheet, a negative electrode sheet, and separators therebetween, and separating them when a target winding length is reached.

When the electrode sheet includes a defective portion, the defective portion of the electrode sheet may be scrapped. The defective portion of the electrode sheet may be scrapped by the roll pressing device 200 or the winding device 400. More specifically, when each of coated lanes included in a first portion of the electrode sheet includes a defect, the first portion of the electrode sheet may be scrapped by the roll pressing device 200. More specifically, when some of coated lanes included in a second portion of the electrode sheet include a defect and the other portions do not include a defect, the coated lanes of the second portion of the electrode sheet may be selectively scrapped by the winding device 400 based on the presence of a defect of the coated lanes.

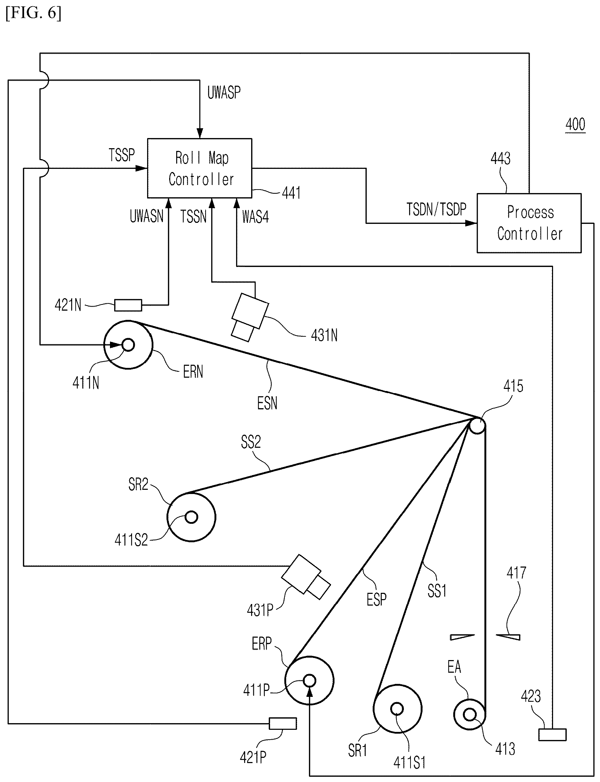

The EIF 1010 may be a device for communication between the server 1020 and process programmable logic controllers (PLCs) of manufacturing equipment. A process controller 143 of the coating device 100 (see FIG. 2), a process controller 243 of the roll pressing device 200 (see FIG. 4), a process controller 343 of the slitting device 300 (see FIG. 5), and a process controller 443 of the winding device 400 (see FIG. 6) may communicate with the server 1020 through the EIF 1010. Accordingly, data of process events generated by the coating device 100, the roll pressing device 200, the slitting device 300, and the winding device 400 may be transmitted to the server 1020.

The server 1020 may be configured to generate a roll map including data of a process event. Data of the roll map may include a value indicating the process event and coordinates matching the value. The coordinates may indicate a position on an electrode. Accordingly, the roll map enables feedback, feedforward, and tracking of a secondary battery manufacturing process.

Roll maps may be generated in units of lots. A lot is a production unit of a roll-to-roll process, and an example thereof is an electrode roll (or an electrode assembly roll) separated after a target winding length in each process is achieved. Similarly, an electrode roll loaded on an unwinder of each process is an example of a lot. The server 1220 may generate and store a roll map of each of processes (e.g., the coating process, the roll press process, or the slitting process).

In a roll map, time series data constructed over time (i.e., according to the progress of a process) may be related to coordinate data collected based on the amount of movement (i.e., the amount of exhaustion or the amount of input) of an electrode sheet.

The manufacture of a secondary battery involves a series of different processes, and a leading process affects the following process. In this case, it is difficult to reflect time series data of the leading process in the following process when the time series data of the leading process does not directly match a real-world workpiece, an intermediate product, and a product. Hereinafter, correcting the following process on the basis of data generated according to a result of the leading process will be referred to as feedforward.

Here, the workpiece is an article provided as a result of each process, e.g., an electrode sheet on which the coating process, the roll press process, and the slitting process are performed. The intermediate product may include separators, electrodes, or and assemblies thereof that are cut by the notching process. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

Generally, process events occur as a result of performing a process and thus data thereof is time series data. Accordingly, data of process events may include values indicating the events and time values matching the values.

For feedforward, time series data should be related to positions on real-world workpieces, components, intermediate products, and products. Here, the feedforward may include controlling processing of an electrode sheet, based on a roll map generated in a preceding process. The roll map may allow time series data to be related with coordinate data including coordinates of the positions on the real-world workpieces, the components, the intermediate products, and the products. The roll map may provide matching between time series data and the real-world workpieces, the components, the intermediate products, and the products, based on the coordinate data. Accordingly, feedforward based on generation of the roll map and the roll map may improve the productivity and quality of the secondary battery manufacturing process by digitizing and objectifying aspects of a process that depend on an operator's discretion.

A roll map of a preceding lot may be used to improve a process for a following lot, and this operation may be referred to as process feedback. The process feedback using the roll map may include identifying process conditions and process parameters that cause problems and defects, based on data included in the roll map.

Furthermore, as described below, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in a battery cell on the market, history data of the manufacture of the battery cell may be retrieved based on the cell ID.

According to example embodiments, the server 1020 may be a data processing system that supports all activities required to manage the manufacture of a secondary battery, such as work schedule management, work instructions, quality control, and work performance aggregation. The server 1020 may be, for example, a manufacturing execution system (MES). The server 1020 may be configured to perform inputting, processing, outputting, and communication of data necessary for the manufacture of electrodes, including the coating process, a press process, and a slitting process.

According to other example embodiments, the server 1020 may be configured to store and process raw measurement data. The server 1020 may manage the quality of processing the electrode sheet by continuously monitoring the processing of the electrode sheet based on the measurement data. According to example embodiments, the server 1020 may be a statical process controller (SPC). The server 1020 may collect and analyze manufacturing data in almost real time to identify problematic conditions in a timely manner and provide a notification to an operator before potential problems occur.

According to other example embodiments, the server 1020 may be, for example, a data warehouse, and store a roll map for a long period of time according to a product quality guarantee period and the like.

According to other example embodiments, the server 1020 may perform all functions of an MES, an SPC, and a data warehouse or be provided separately from the MES, the SPC, and the data warehouse to create a roll map.

FIG. 2 illustrates a coating device 100 according to example embodiments.

The coating device 100 may include an unwinder 111, a rewinder 113, a die coater 115, markers 117 a, 117 b, 117 c, 117 d, 117 e and 117 f, a controller 119, a first rotary encoder 121, a second rotary encoder 123, an inspector 131, a roll map controller 141, and the process controller 143.

A first electrode roll ER1 may be loaded on the unwinder 111. The unwinder 111 may be configured to unwind a first electrode sheet ES1 from the first electrode roll ER1. The rewinder 113 may be configured to wind the first electrode sheet ES1 into a second electrode roll ER2. The first electrode sheet ES1 may be wound into the second electrode roll ER2, and be cut and separated after a certain winding length is reached. Accordingly, the first electrode sheet ES1 may be moved between the unwinder 111 and the rewinder 113.

The first rotary encoder 121 may be configured to sense the amount of the first electrode sheet ES1 unwound from the first electrode roll ER1 by the unwinder 111. Accordingly, the first rotary encoder 121 may be configured to generate an input amount signal UWAS1 indicating a length of the first electrode sheet ES1 unwound by the unwinder 111. The first rotary encoder 121 may be configured to transmit the input amount signal UWAS1 to the roll map controller 141.

The second rotary encoder 123 may be configured to sense the amount of the first electrode sheet ES1 wound into the second electrode roll ER2 by the rewinder 113. Accordingly, the second rotary encoder 123 may be configured to generate an exhaustion amount signal WAS1 indicating a length of the first electrode sheet ES1 wound by the rewinder 113. The second rotary encoder 123 may be configured to transmit the exhaustion amount signal WAS1 to the roll map controller 141.

The die coater 115 may be configured to coat the first electrode sheet ES1 with an electrode slurry containing an active material. When the first electrode sheet ES1 is a positive electrode current collector, an electrode slurry containing a positive electrode active material may be provided on the first electrode sheet ES1, and when the first electrode sheet ES1 is a negative electrode current collector, an electrode slurry containing a negative electrode active material may be provided on the first electrode sheet ES1.

The roll map controller 141 may be configured to collect coordinate data CD1 of the first electrode sheet ES1, based on the exhaustion amount signal WAS1 and/or the input amount signal UWAS1 of the first electrode sheet ES1. For example, the roll map controller 141 may determine a moving distance of the first electrode sheet ES1, based on the input amount signal UWAS1 of the first electrode sheet ES1. Accordingly, the roll map controller 141 may be configured to determine a position of a portion of the first electrode sheet ES1, which is to be unwound by the unwinder 111, on the first electrode sheet ES1 at each point in time when an event occurs on the first electrode sheet ES1. Here, the event may include inspecting the first electrode sheet ES1 by the inspector 131 and generating NG marks by the markers 117A, 117B, 117C, 117D, 117E, and 117F.

As another example, the roll map controller 141 may determine a moving distance of the first electrode sheet ES1, based on the exhaustion amount signal WAS1 of the first electrode sheet ES1. Accordingly, the roll map controller 141 may be configured to determine a position of a portion of the first electrode sheet ES1, which is to be wounded by the rewinder 113, on the first electrode sheet ES1 at each point in time when an event occurs on the first electrode sheet ES1. As another example, the roll map controller 141 may determine a moving distance of the first electrode sheet ES1, based on each of the exhaustion amount signal WAS 1 and the input amount signal UWAS1.

Hereinafter, as a non-limiting example, the technical idea of the present invention will be described with respect to an embodiment in which the roll map controller 141 collects coordinate data CD1 on the basis of the exhaustion amount signal WAS1 of the first electrode sheet ES1.

The coordinate data CD1 may include coordinates matching each portion of the first electrode sheet ES1. That is, arbitrary points on the first electrode sheet ES1 may match the coordinates. The coordinates may be a one-dimensional quantity in a direction of movement of the first electrode sheet ES1 but is not limited thereto. The coordinates may be a two-dimensional quantity in a Y-axis direction of the direction of movement and a transverse direction of the first electrode sheet ES1.

The inspector 131 may be configured to inspect a surface of the first electrode sheet ES1. According to example embodiments, the inspector 131 may be a vision inspector. The inspector 131 may include a sensing part 131S and a processor 131P. The sensing part 131S and the processor 131P may be connected by wire or wirelessly.

The sensing part 131S may include an imaging device such as a time delay and integration (TDI) camera or a complementary metal oxide semiconductor (CMOS) image sensor. The sensing part 131S may be configured to generate an inspection signal IS indicating a surface of the first electrode sheet ES1. The sensing part 131S may be configured to transmit the inspection signal IS to the processor 131P. The inspection signal IS may include, for example, an image of the surface of the first electrode sheet ES1.

The processor 131P may be configured to determine a judgement value indicating whether there is a defect in the first electrode sheet ES1, based on the inspection signal IS. The processor 131P may be configured to process the inspection signal IS based on a set algorithm to generate the judgement value of the first electrode sheet ES1.

The processor 131P may be configured to collect inspection data ID based on the inspection signal IS and the coordinate data CD1. The processor 131P may be configured to collect the inspection data ID by matching the judgement value determined based on the inspection signal IS and coordinates of the coordinate data CD1. The processor 131P may be configured to transmit the inspection data ID to the roll map controller 141.

For matching the judgement value and the coordinates of the coordinate data CD1, the processor 131P may be configured to calibrate the coordinate of the coordinate data CD1. The processor 131P may be configured to calibrate the coordinates of the coordinate data CD1 based on a length of the first electrode sheet ES1 between a portion of the first electrode sheet ES1 wound by the rewinder 113 and a portion of the first electrode sheet ES1 sensed by the sensing part 131S, and match the calibrated coordinates to the judgement value.

According to example embodiments, the first electrode sheet ES1 may be a positive electrode current collector, and the judgement values of the inspection signal IS and the inspection data ID may be determined based on an insulation overlay. When the first electrode sheet ES1 is a positive electrode current collector, the electrode slurry may include a positive electrode active material, and an additional insulation layer may further be applied on the positive electrode active material. The insulation overlay is an overlapping width between the positive electrode active material and the insulation layer that are applied on the first electrode sheet ES1 which is the positive electrode current collector. When the insulation overlay is excessive, electrical characteristics of a battery cell manufactured from the first electrode sheet ES1 may degrade or a defect may be caused due to electrical opening. When the insulation overlay is insufficient, an unintended short circuit may occur in an electrode assembly EA (see FIG. 6) manufactured from the first electrode sheet ES1.

According to example embodiments, the first electrode sheet ES1 may be a negative electrode current collector, and the judgement values of the inspection signal IS and the inspection data ID may be determined based on a slide. When the first electrode sheet ES1 is a negative electrode current collector, the electrode slurry may include a negative electrode active material. The slide may be a slope of a profile of the negative electrode active material on an edge of each of the coated lanes. Here, the profile is an outline of the negative electrode active material of the first electrode sheet ES1 in a cross-sectional view in a transverse direction. When the slide is extremely large, a positive electrode may be damaged when the positive electrode and a negative electrode are wound together.

According to example embodiments, either a single coordinate indicating a position of a defect or a start coordinate indicating the start of the defect and an end coordinate indicating the end of the defect match the judgement value of the inspection data ID.

The processor 131P may be configured to transmit the inspection data ID to the roll map controller 141. The roll map controller 141 may be configured to transmit the inspection data ID to the process controller 143. The process controller 143 may be configured to transmit the inspection data ID to the controller 119.

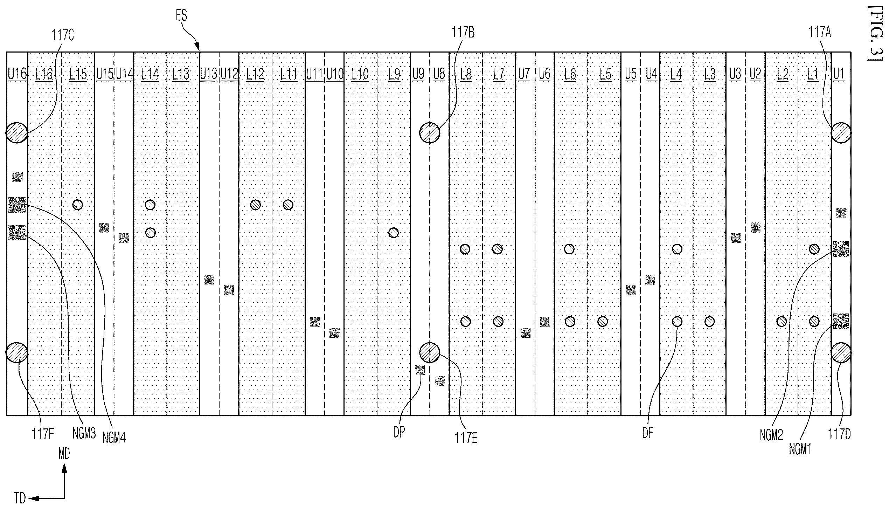

According to example embodiments, the controller 119 may be configured to control the markers 117A, 117B, 117C, 117D, 117E, and 117F based on the inspection data ID. The controller 119 may be configured to generate a command MCD to control the markers 117A, 117B, 117C, 117D, 117E, and 117F based on the inspection data ID, and transmit the command MCD to the markers 117A, 117B, 117C, 117D, 117E, and 117F. The controller 119 may be configured to transmit data about operations of the markers 117A, 117B, 117C, 117D, 117E, and 117F (i.e., data about the formation of NG marks NGM1, NGM2, NGM3, and NGM4 of FIG. 3) to the process controller 143.

The process controller 143 may be configured to transmit the inspection data ID and the data about the operations of the markers 117A, 117B, 117C, 117D, 117E, and 117F to the server 1020 (see FIG. 1) via the EIF 1010 (see FIG. 1). The server 1020 (see FIG. 1) may be configured to generate a roll map of the second electrode roll ER2 processed by the coating device 100, based on the inspection data ID and additional process event data.

The markers 117A, 117B, 117C, 117D, 117E, and 117F may be configured to generate NG marks on the first electrode sheet ES1 based on the command MCD. The NG marks may be, for example, two-dimensional (2D) barcode. The NG marks may include a judgement value of a plurality of lanes and information about a sequence in which the NG marks are formed.

The markers 117A, 117B, 117C, 117D, 117E and 117F may be configured to further form datum points on the first electrode sheet ES1. The datum points may be, for example, 2D barcode. The datum points may include information about a sequence and direction in which they are formed.

FIG. 3 is a diagram for describing the formation of the NG marks NGM1, NGM2, NGM3, and NGM4 by the markers 117A, 117B, 117C, 117D, 117E, and 117F.

Referring to FIGS. 2 and 3, the markers 117A, 117B and 117C may be arranged in a transverse direction TD of the first electrode sheet ES1 (or a width direction of the first electrode sheet ES1), and the markers 117D, 117E and 117F may be arranged in the transverse direction TD. The markers 117A, 117B and 117C may be spaced apart from the markers 117D, 117E and 117F in a machine direction of the first electrode sheet ES1 (or a longitudinal direction of the first electrode sheet ES1).

The die coater 115 may form a plurality of coated lanes L1, L2, L3, L4, L5, L6, L7, L8, L9, L10, L11, L12, L13, L14, L15, and L16 (hereinafter, L1 to L16) on the first electrode sheet ES1. The plurality of coated lanes L1 to L16 are portions of the first electrode sheet ES1 coated with an active material.

The coated lanes L1 and L2 may be formed from the same slit of the die coater 115 and be connected to each other. The coated lanes L3 and L4 may be formed from the same slit of the die coater 115 and be connected to each other. The coated lanes L5 and L6 may be formed from the same slit of the die coater 115 and be connected to each other. The coated lanes L7 and L8 may be formed from the same slit of the die coater 115 and be connected to each other. The coated lanes L9 and L10 may be formed from the same slit of the die coater 115 and be connected to each other. The coated lanes L11 and L12 may be formed from the same slit of the die coater 115 and be connected to each other. The coated lanes L13 and L14 may be formed from the same slit of the die coater 115 and be connected to each other. The coated lanes L15 and L16 may be formed from the same slit of the die coater 115 and be connected to each other.

The coated lanes L1 and L2, the coated lanes L3 and L4, the coated lanes L5 and L6, the coated lanes L7 and L8, the coated lanes L9 and L10, the coated lanes L11 and L12, the coated lanes L13 and L14, and the coated lanes L15 and L16 may be separated by the slitting device 300. That is, the first electrode sheet ES1 including the sixteen coated lanes L1 to L16 may be separated into a second electrode sheet ES2 including the eight coated lanes L1 to L8 and a second electrode sheet ES2 including the eight coated lanes L9 to L16, and a third electrode sheet ES3 may be cut into a plurality of separate electrode sheets ES3a and ES3b (see FIG. 5) each including only one of the coated lanes L1 to L16 by the slitting device 300.

The plurality of coated lanes L1 to L16 may extend in the machine direction MD of the first electrode sheet ES1. The plurality of coated lanes L1 to L16 may be spaced apart from one another in the transverse direction TD of the first electrode sheet ES1.

Each of uncoated parts U1, U2, U3, U4, U5, U6, U7, U8, U9, U10, U11, U12, U13, U14, U15, and U16 (hereinafter, U1 to U16) is a portion of the first electrode sheet ES1 that is not coated with the active material. The uncoated parts U1 and U16 may be on opposite ends of the first electrode sheet ES1 in the transverse direction TD. The uncoated parts U2 and U3 may be interposed between the coated lanes L2 and L3. The uncoated parts U4 and U5 may be interposed between the coated lanes L4 and L5. The uncoated parts U6 and U7 may be interposed between the coated lanes L6 and L7. The uncoated parts U8 and U9 may be interposed between the coated lanes L8 and L9. The uncoated parts U10 and U11 may be interposed between the coated lanes L10 and L11. The uncoated parts U12 and U13 may be interposed between the coated lanes L12 and L13. The uncoated parts U14 and U15 may be interposed between the coated lanes L14 and L15.

The uncoated part U1 may correspond to the coated lane L1, and the uncoated part U1 and the coated lane L1 may be included in the same electrode roll after completion of the slitting process. The uncoated part U2 may correspond to the coated lane L2, and the uncoated part U2 and the coated lane L2 may be included in the same electrode roll after completion of the slitting process. The uncoated part U3 may correspond to the coated lane L3, and the uncoated part U3 and the coated lane L3 may be included in the same electrode roll after completion of the slitting process. The uncoated part U4 may correspond to the coated lane L4, and the uncoated part U4 and the coated lane L4 may be included in the same electrode roll after completion of the slitting process. The uncoated part U5 may correspond to the coated lane L5, and the uncoated part U5 and the coated lane L5 may be included in the same electrode roll after completion of the slitting process. The uncoated part U6 may correspond to the coated lane L6, and the uncoated part U6 and the coated lane L6 may be included in the same electrode roll after completion of the slitting process. The uncoated part U7 may correspond to the coated lane L7, and the uncoated part U7 and the coated lane L7 may be included in the same electrode roll after completion of the slitting process. The uncoated part U8 may correspond to the coated lane L8, and the uncoated part U8 and the coated lane L8 may be included in the same electrode roll after completion of the slitting process. The uncoated part U9 may correspond to the coated lane L9, and the uncoated part U9 and the coated lane L9 may be included in the same electrode roll after completion of the slitting process. The uncoated part U10 may correspond to the coated lane L10, and the uncoated part U10 and the coated lane L10 may be included in the same electrode roll after completion of the slitting process. The uncoated part U11 may correspond to the coated lane L11, and the uncoated part U11 and the coated lane L11 may be included in the same electrode roll after completion of the slitting process. The uncoated part U12 may correspond to the coated lane L12, and the uncoated part U12 and the coated lane L12 may be included in the same electrode roll after completion of the slitting process. The uncoated part U13 may correspond to the coated lane L13, and the uncoated part U13 and the coated lane L13 may be included in the same electrode roll after completion of the slitting process. The uncoated part U14 may correspond to the coated lane L14, and the uncoated part U14 and the coated lane L14 may be included in the same electrode roll after completion of the slitting process. The uncoated part U15 may correspond to the coated lane L15, and the uncoated part U15 and the coated lane L15 may be included in the same electrode roll after completion of the slitting process. The uncoated part U16 may correspond to the coated lane L16, and the uncoated part U16 and the coated lane L16 may be separated into the same electrode sheet by the slitting process.

The markers 117A, 117C, 117D, and 117F may be configured to form the NG marks NGM1, NGM2, NGM3, and NGM4 and datum points on the first electrode sheet ES1 at fixed positions. The markers 117B and 117E may be configured to move in the transverse direction TD of the first electrode sheet ES1 to form datum points.

Accordingly, the uncoated part U1 corresponding to the coated lane L1 may be covered by the markers 117A and 117D, the uncoated part U16 corresponding to the coated lane L16 is covered by the markers 117C and 117F, and the uncoated parts U3, U4, U5, U6, U7, U8, U9, U10, U11, U12, U13, U14, and U15 corresponding to the coated lanes L3, L4, L5, L6, L7, L8, L9, L10, L11, L12, L13, L14, and L15 may be covered by the markers 117C and 117F.

Because the frequency of the NG marks NGM1, NGM2, NGM3, and NGM4 is higher than that of the datum points DP, a large number of markers 117A, 117C, 117D, and 117F may be assigned to the formation of the NG marks NGM1, NGM2, NGM3, and NGM4. The datum points indicate relative positions of the coated lanes L1 to L16 in the machine direction MD and thus may be formed on the uncoated parts U1 to U16, respectively. The NG marks NGM1, NGM2, NGM3, and NGM4 include information about position of defects DF in the transverse direction TD (i.e., coated lanes including the defects DF among the coated lanes L1 to L16) and thus may be formed only on some uncoated parts, i.e., the uncoated part U1 and U16, thereby reducing capital expenditure and resources required to form the datum points DP and the NG marks NGM1, NGM2, NGM3, and NGM4.

The NG marks NGM1, NGM2, NGM3, and NGM4 may include, for example, two bits indicating the positions of the defects DF and two bits indicating a sequence of the NG marks NGM1, NGM2, NGM3, and NGM4. When the second electrode roll ER2 is completed, the coated lanes L1, L2, L3, L4, L5, L6, L7, and L8 (hereinafter, L1 to L8) and the coated lanes L9, L10, L11, L12, L13, L14, L15, and L16 (hereinafter, L9 to L16) may be separated from each other. That is, one first electrode roll ER1 may be wound into two electrode rolls ER2. The NG marks NGM1 and NGM2 on the uncoated part U1 may represent defects DF on the coated lanes L1 to L8, and the NG marks NGM3 and NGM4 on the uncoated part U16 may represent defects DF on the coated lanes L9 to L16.

Table 1 shows values of the bits indicating the positions of the defects DF of the NG marks NGM1, NGM2, NGM3, and NGM4 and the positions of the defects DF according to the values of the bits.

**[Table 1]**

| bit value | fourth lane | third lane | two lane | first lane |
|---|---|---|---|---|
| 0 | 0 | 0 | 0 | 0 |
| 1 | 0 | 0 | 0 | 1 |
| 2 | 0 | 0 | 1 | 0 |
| 3 | 0 | 0 | 1 | 1 |
| 4 | 0 | 1 | 0 | 0 |
| 5 | 0 | 1 | 0 | 1 |
| 6 | 0 | 1 | 1 | 0 |
| 7 | 0 | 1 | 1 | 1 |
| 8 | 1 | 0 | 0 | 0 |
| 9 | 1 | 0 | 0 | 1 |
| A | 1 | 0 | 1 | 0 |
| B | 1 | 0 | 1 | 1 |
| C | 1 | 1 | 0 | 0 |
| D | 1 | 1 | 0 | 1 |
| E | 1 | 1 | 1 | 0 |
| F | 1 | 1 | 1 | 1 |

Here, the first lane may represent one of the coated lanes L1, L5, L9, and L13, the second lane may represent one of the coated lanes L2, L6, L10, and L14, the third lane may represent one of the coated lanes L2, L6, L10, and L14, and the fourth lane may represent one of the coated lanes L4, L8, L12, and L16. The NG marks NGM1 and NGM2 on the uncoated part U1 may represent positions of the defects DF on the coated lanes L1 to L8 in the transverse direction TD, and the NG marks NGM3 and NGM4 on the uncoated part U16 may represent positions of the defects DF on the coated lanes L9 to L16 in the transverse direction TD. One of bits of the NG marks NGM1 and NGM2 on the uncoated part U1 may represent positions of the defects DF on the coated lanes L1 to L4 in the transverse direction TD, and the other bit may represent positions of the defects DF on the coated lanes L5 to L8 in the transverse direction TD. One of bits of the NG marks NGM3 and NGM4 on the uncoated part U16 may represent positions of the defects DF on the coated lanes L9 to L12 in the transverse direction TD, and another bit thereof may represent positions of the defects DF on the coated lanes L13 to L16 in the transverse direction TD.

For example, when a readout value of the NG mark NGM1 on the uncoated part U1 is <FF16>, the first bit 'F' represents that there is a defect DF on each of portions of the coated lanes L1, L2, L3, and L4 overlapping the NG mark NGM1 in the transverse direction TD, the second bit 'F' represents that there is a defect DF on each of portions of the coated lanes L5, L6, L7, and L8 overlapping the NG mark NGM1 in the transverse direction TD, and the third and fourth bits '16' represent that the NG mark NGM1 is a sixteenth NG mark.

As another example, when a readout value of the NG mark NGM2 on the uncoated part U1 is <9E17>, the first bit '9' represents that there is a defect DF on each of portions of the coated lanes L1 and L4 overlapping the NG mark NGM2 in the transverse direction TD, the second bit 'E' represents that there is a defect DF on each of portions of the coated lanes L6, L7, and L8 overlapping the NG mark NGM2 in the transverse direction TD, and the third and fourth bits '17' represent that the NG mark NGM2 is a seventeenth NG mark.

As another example, when a readout value of the NG mark NGM3 on the uncoated part U16 is <1208>, the first bit '1' represents that there is a defect DF on a portion of the coated lanes L9 overlapping the NG mark NGM3 in the transverse direction TD, the second bit '2' represents that there is a defect DF on a portion of the coated lane L14 overlapping the NG mark NGM3 in the transverse direction TD, and the third and fourth bits '08' represent that the NG mark NGM3 is an eighth NG mark.

As another example, when a readout value of the NG mark NGM4 on the uncoated part U16 is <C609>, the first bit 'C' represents that there is a defect DF on each of portions of the coated lanes L11 and L12 overlapping the NG mark NGM4 in the transverse direction TD, the second bit '6' represents that there is a defect DF on each of portions of the coated lanes L14 and L15 overlapping the NG mark NGM4 in the transverse direction TD, and the third and fourth bits '09' represent that the NG mark NGM2 is a ninth NG mark.

An example in which two bits indicating the sequence of the NG marks NGM1, NGM2, NGM3, and NGM4 follow two bits indicating the positions of the defects DF in the transverse direction TD (i.e., a coated lane to which each of the defects DF belongs among the plurality of coated lanes L1 to L16) has been described above. Those of ordinary skill in the art will be able to easily derive an embodiment in which bits indicating the positions of the defects DF and the bits indicating the sequence of the NG marks NGM1, NGM2, NGM3, and NGM4 are arranged in an arbitrary permutation.

In the readout values of the NG marks NGM1 and NGM2 described above, the first bit indicating whether there is a defect on the four lanes L1, L2, L3, and L4 is a preceding bit, the second bit indicating whether there is a defect on the four lanes L5, L6, L7, and L8 follows the first bit, the third bit indicating a tens place of the sequence follows the second bit, and the fourth bit indicating a ones place of the sequence follows the third bit.

In an arbitrary permutation, for example, a first bit may follow a second bit, a fourth bit may follow the first bit, and a third bit may follow the fourth bit. The arbitrary permutation of the first to fourth bits includes a total of twenty-four arrays, and those of ordinary skill in the art will be able to easily derive the remaining twenty-three arrays based on the above description.

Furthermore, those of ordinary skill in the art will be able to easily derive an embodiment in which NG marks are formed on one of the uncoated parts U2, U3, U4, U5, U6, U7, and U8 and one of the uncoated parts U9, U10, U11, U12, U13, U14, and U15, an embodiment in which NG marks are formed on only one of the uncoated parts U1 to U16, an embodiment in which NG marks include three or more bits indicating positions of defects DF, and an embodiment in which NG marks include three or more bits indicating a sequence of the NG marks. In addition, FIG. 3 illustrates only one surface of the first electrode sheet ES1 but the coating process may be performed on each of both surfaces of the first electrode sheet ES1.

FIG. 4 illustrates a roll pressing device 200 according to example embodiments.

Referring to FIG. 4, the roll pressing device 200 may include an unwinder 211, a rewinder 213, a splicing table 215, a scrap port 217, pressing rolls 219, a first rotary encoder 221, a second rotary encoder 223, an NG mark sensor 231, a roll map controller 241, and a process controller 243.

The second electrode roll ER2 may be loaded on the unwinder 211. The second electrode roll ER2 may be completed by the coating device 100 and transferred to the roll pressing device 200 by a transfer device. The unwinder 211 may be configured to unwind the second electrode sheet ES2 from the second electrode roll ER2. The rewinder 213 may be configured to wind the second electrode sheet ES2 into a third electrode roll ER3. The second electrode sheet ES2 may be wound into the third electrode roll ER3, and the third electrode roll ER3 may be cut and separated after a target winding amount is reached. Accordingly, the second electrode sheet ES2 may be moved between the unwinder 211 and the rewinder 213.

The first rotary encoder 221 may be configured to sense the amount of the second electrode sheet ES2 unwound from the second electrode roll ER2 by the unwinder 211. Accordingly, the first rotary encoder 221 may be configured to generate an input amount signal UWAS2 indicating a length of the second electrode sheet ES2 unwound by the unwinder 211. The first rotary encoder 221 may be configured to transmit the input amount signal UWAS1 to the roll map controller 241.

The second rotary encoder 223 may be configured to sense an amount of the second electrode sheet ES2 wound into the third electrode roll ER3 by the rewinder 213. Accordingly, the second rotary encoder 223 may be configured to generate an exhaustion amount signal WAS2 indicating a length of the second electrode sheet ES2 wound by the rewinder 213. The second rotary encoder 223 may be configured to transmit the exhaustion amount signal WAS2 to the roll map controller 241.

The roll map controller 241 may be configured to collect coordinate data CD2 of the second electrode sheet ES2, based on the exhaustion amount signal WAS2 and/or the input amount signal UWAS2 of the second electrode sheet ES2. For example, the roll map controller 241 may determine a moving distance of the second electrode sheet ES2, based on the input amount signal UWAS2 of the second electrode sheet ES2. Accordingly, the roll map controller 241 may be configured to determine a position of a portion of the second electrode sheet ES2, which is to be unwound by the unwinder 211, on the second electrode sheet ES2 at each point in time when an event occurs on the second electrode sheet ES2. Here, the event may include inspecting the second electrode sheet ES2 by the NG mark sensor 231 and processing the second electrode sheet ES2 by the pressing rolls 219.

As another example, the roll map controller 241 may determine a moving distance of the second electrode sheet ES2, based on the exhaustion amount signal WAS2 of the second electrode sheet ES2. Accordingly, the roll map controller 241 may be configured to determine a position of a portion of the second electrode sheet ES2, which is to be wound by the rewinder 213, on the second electrode sheet ES2 at each point in time when an event occurs on the second electrode sheet ES2. As another example, the roll map controller 241 may determine a moving distance of the first electrode sheet ES1, based on each of the exhaustion amount signal WAS2 and the input amount signal UWAS2.

Hereinafter, as a non-limiting example, the technical idea of the present invention will be described with respect to an embodiment in which the roll map controller 241 collects coordinate data CD2 based on the exhaustion amount signal WAS2 of the second electrode sheet ES2.

The coordinate data CD2 may include coordinates matching each portion of the second electrode sheet ES2. That is, arbitrary points on the second electrode sheet ES2 may match the coordinates. The coordinates may be one-dimensional (1D) quantity in a machine direction of the second electrode sheet ES2 but is not limited thereto. The coordinates may be two-dimensional (2D) quantity in the machine direction and a Y-axis direction in a transverse direction of the second electrode sheet ES2.

The NG mark sensor 231 may be configured to sense the NG marks NGM1, NGM2, NGM3, and NGM4 (see FIG. 3) on the second electrode sheet ES2. The NG mark sensor 231 may include a sensing part 231S and a processor 231P. The sensing part 231S and the processor 231P may be connected by wire or wirelessly.

According to example embodiments, the sensing part 231S may include a barcode reader. The sensing part 231S may be configured to sense the NG marks NGM1, NGM2, NGM3, and NGM4 (FIG. 3) to generate a mark sensing signal MSS1. The sensing part 231S may be configured to transmit the mark sensing signal MSS1 to the processor 231P.

The processor 231P may be configured to collect mark sensing data MSD1 based on the mark sensing signal MSS1 and the coordinate data CD2. The processor 231P may be configured to collect the mark sensing data MSD1 by matching bit values of the NG marks NGM1, NGM2, NGM3, and NGM4 (see FIG. 3) and coordinates of the coordinate data CD2. The processor 231P may be configured to transmit the mark sensing data MSD1 to the roll map controller 241.

For matching the bit values of the NG marks NGM1, NGM2, NGM3, and NGM4 (see FIG. 3) to the coordinates of the coordinate data CD2, the processor 231P may be configured to calibrate the coordinates of the coordinate data CD2. The processor 131P may be configured to calibrate the coordinates of the coordinate data CD2 based on a length of the second electrode sheet ES2 between a portion of the second electrode sheet ES2 wound by the rewinder 213 and a portion of the second electrode sheet ES2 sensed by the sensing part 231S, and match the calibrated coordinates to a judgement value.

The processor 231P may be configured to transmit the mark sensing data MSD1 to the roll map controller 241. The roll map controller 241 may be configured to transmit the mark sensing data MSD1 to the process controller 243. The process controller 243 may be configured to transmit the mark sensing data MSD1 and additional process event data to the server 1020 (see FIG. 1) via the EIF 1010 (see FIG. 1). The server 1020 (see FIG. 1) may be configured to generate a roll map of the third electrode roll ER3 processed by the roll pressing device 200, based on the mark sensing data MSD1 and the additional process event data.

The process controller 243 may be configured to control operations of the unwinder 211, the rewinder 213, the scrap port 217, and the pressing rolls 219, based on the mark sensing data MSD1. The process controller 243 may be configured to generate a signal for operating or stopping the unwinder 211, the rewinder 213, the scrap port 217 and the pressing rolls 219. The signal for operating or stopping the unwinder 211, the rewinder 213, the scrap port 217, and the pressing rolls 219 may be generated based on body including a product ID and details of a manufacturing recipe and the mark sensing data MSD1.

When a defect on the second electrode sheet ES2 identified using the mark sensing data MSD1 approaches the splicing table 215, the process controller 243 may be configured to reduce a movement speed of the second electrode sheet ES2 or to generate a signal for stopping unwinding performed by the unwinder 211 and winding performed by the rewinder 213.

The coating device 100 (see FIG. 2) may include a half-slitting device and thus the first electrode sheet ES1 (see FIG. 2) may be divided into two pieces before (or after) the first electrode sheet ES1 is wound into the second electrode roll ER2. For example, the second electrode sheet ES2 unwound from the second electrode roll ER2 may include some, e.g., coated lanes L1 to L8 or coated lanes L9 to L16, of the plurality of coated lanes L1 to L16 of FIG. 3.

When all the coated lanes of the second electrode sheet ES2 each include a defect, a defective part DES of the second electrode sheet ES2 may be scrapped by the roll pressing device 200. For example, when the second electrode sheet ES2 includes the first to eighth coated lanes L1 to L8 of FIG. 3, a portion of the second electrode sheet ES2 including the NG mark NGM1 may be scrapped.

The scrap port 217 may be configured to wind a defective portion DES of the second electrode sheet ES2 as indicated by a dashed line, after cutting a start point of the defect (or a point adjacent to the start point when a process margin is taken into account) on the splicing table 215. After the defective portion DES of the second electrode sheet ES2 is sufficiently wound by the scrap port 217, a portion of the second electrode sheet ES2 connected to the scrap port 217 and a portion of the second electrode sheet ES2 connected to the unwinder 211 may be separated. Next, a current process may be continued by connecting the portion of the second electrode sheet ES2 connected to the unwinder 211 and the portion of the second electrode sheet ES2 connected to the rewinder 213. The portion of the second electrode sheet ES2 connected to the unwinder 211 and the portion of the second electrode sheet ES2 connected to the rewinder 213 may be connected on the splicing table 215.

When some of the coated lanes of the second electrode sheet ES2 include a defect, the second electrode sheet ES2 may not be scrapped by the roll pressing device 200. Portions of the coated lanes including the defect may be scrapped by the slitting device 300 (see FIG. 5). For example, portions of the second electrode sheet ES2 including the NG marks NGM2, NGM3, and NGM4 (see FIG. 3) may not be scrapped by the roll pressing device 200.

The portion of the second electrode sheet ES2 passing the splicing table 215 may be wound into the third electrode roll ER3 by the rewinder 213 after being pressed by the press rolls 219.

FIG. 5 illustrates a slitting device 300 according to example embodiments.

Referring to FIG. 5, the slitting device 300 may include an unwinder 311, rewinders 313a and 313b, a slitting knife 315, a guide roll 316, NG tag attachers 317a and 317b, a controller 319, a first rotary encoder 321, a second rotary encoder 323a and 323b, an NG mark sensor 331, a roll map controller 341, and a process controller 343.

The third electrode roll ER3 may be loaded on the unwinder 311. The third electrode roll ER3 may be completed by the roll pressing device 200 and transferred to the roll pressing device 200 by a transfer device. The unwinder 311 may be configured to unwind a third electrode sheet ES3 from the third electrode roll ER3. The third electrode sheet ES3 may be cut into separate electrode sheets ES3a and ES3b by the slitting knife 315. The separate electrode sheet ES3a may be referred to as a first separate electrode sheet, and the separate electrode sheet ES3b may be referred to as a second separate electrode sheet. Each of the separate electrode sheet ES3a and the separate electrode sheets ES3b may include a coated lane. The coated lane of the separate electrode sheet ES3a may be referred to as a first coated lane, and the coated lane of the separate electrode sheets ES3b may be referred to as a second coated lane.

For convenience of illustration, FIG. 5 illustrates only the two separate electrode sheets ES3a and ES3b but the separation of an electrode sheet may be determined based on the number of electrode lanes on the electrode sheet. For example, the third electrode sheet ES3 provided by half-slitting the first electrode sheet ES1 including the sixteen coated lanes of FIG. 3 may include eight electrode sheets and thus may be cut into eight separate electrode sheets. The guide roll 316 may be in a moving path of the separate electrode sheet ES3b to separate a moving path of separate electrode sheet ES3a and the moving path of the separate electrode sheet ES3b.

The rewinders 313a and 313b may be configured to wind the separate electrode sheets ES3a and ES3b into fourth electrode rolls ER4a and ER4b. The separate electrode sheets ES3a and ES3b may be wound into the fourth electrode rolls ER4a and ER4b, and the fourth electrode rolls ER4a and ER4b may be cut and separated after a target winding amount is reached. Accordingly, the third electrode sheet ES3 and the separate electrode sheets ES3a and ES3b may be moved between the unwinder 311 and the rewinders 313a and 313b.

The first rotary encoder 321 may be configured to sense the amount of the third electrode sheet ES3 unwound from the third electrode roll ER3 by the unwinder 311. Accordingly, the first rotary encoder 321 may be configured to generate an input amount signal UWAS3 indicating a length of the third electrode sheet ES3 unwound by the unwinder 311. The first rotary encoder 321 may be configured to transmit the input amount signal UWAS3 to the roll map controller 341.

The second rotary encoders 323a and 323b may be configured to sense the amount of the third electrode sheet ES3 wound into the fourth electrode rolls ER4a and ER4b by the rewinders 313a and 313b. Accordingly, the second rotary encoders 323a and 323b may be configured to generate exhaustion amount signals WAS3a and WAS3b indicating lengths of the separate electrode sheets ES3a and ES3b wound by the rewinders 313a and 313b. The second rotary encoders 323a and 323b may be configured to transmit the exhaustion amount signals WAS3a and WAS3b to the roll map controller 341.

The roll map controller 341 may be configured to collect coordinate data CD3a of the electrode sheet ES3a and coordinate data CD3b of the electrode sheet ES3b, based on the input amount signal UWAS3 of the third electrode sheet ES3 and/or the exhaustion amount signals WAS3a andWAS3b of the separate electrode sheets ES3a and ES3b.

For example, the roll map controller 341 may determine a moving distance of the separate electrode sheets ES3a and ES3b based on the input amount signal UWAS3 of the third electrode sheet ES3. Accordingly, the roll map controller 341 may be configured to determine a position of a portion of the third electrode sheet ES3, which is to be unwound by the unwinder 311, on the third electrode sheet ES3 at each point in time when an event occurs on the separate electrode sheets ES3a and ES3b. Here, the event in the slitting device 300 may include, for example, bringing the separate electrode sheets ES3a and ES3b to the NG tag attachers 317a and 317b or attaching an NG tag by the NG tag attachers 317a and 317b.

As another example, the roll map controller 341 may determine a moving distance of the separate electrode sheets ES3a and ES3b, based on the exhaustion amount signals WAS3a and WAS3b of the separate electrode sheets ES3a and ES3b. Accordingly, the roll map controller 341 may be configured to determine positions of portions of the separate electrode sheets ES3a and ES3b, which are to be wound by the rewinders 313a and 313b, on the separate electrode sheets ES3a and ES3b at each point in time when an event occurs on the separate electrode sheets ES3a and ES3b. As another example, the roll map controller 341 may determine a moving distance of the separate electrode sheets ES3a and ES3b, based on each of the exhaustion amount signals WAS3a and WAS3b and the input amount signal UWAS3.

Hereinafter, as a non-limiting example, the technical idea of the present invention will be described with respect to an embodiment in which the roll map controller 341 collects the coordinate data CD3a and CD3b based on the exhaustion amount signals WAS3a and WAS3b of the separate electrode sheets ES3a and ES3b.

The coordinate data CD3a and CD3b may include coordinates matching each of portions of the separate electrode sheets ES3a and ES3b. That is, each of points on the separate electrode sheets ES3a and ES3b may match coordinates. The coordinates may represent 1D quantities in a machine direction of the separate electrode sheets ES3a and ES3b but are not limited thereto. The coordinates may be 2D quantities in the machine direction and a Y-axis direction in a transverse direction of the separate electrode sheets ES3a and ES3b.

The NG mark sensor 331 may be configured to sense the NG marks NGM1, NGM2, NGM3, and NGM4 (see FIG. 3) on the second electrode sheet ES2. The NG mark sensor 331 may include a sensing part 331S and a processor 331P. The sensing part 331S and the processor 331P may be connected by wire or wirelessly.

According to example embodiments, the sensing part 331S may include a barcode reader. The sensing part 331S may be configured to sense the NG marks NGM1, NGM2, NGM3, and NGM4 (FIG. 3) to generate a mark sensing signal MSS2. The sensing part 331S may be configured to transmit the mark sensing signal MSS2 to the processor 331P.

The processor 331P may be configured to collect mark sensing data MSD2 based on the mark sensing signal MSS2 and the coordinate data CD3a and CD3b. The processor 331P may be configured to collect the mark sensing data MSD2 by matching bit values of the NG marks NGM1, NGM2, NGM3, and NGM4 (see FIG. 3) and coordinates of the coordinate data CD3a and CD3b. The processor 331P may be configured to transmit the mark sensing data MSD2 to the roll map controller 341 and the controller 319.

For matching the bit values of the NG marks NGM1, NGM2, NGM3, and NGM4 (see FIG. 3) to the coordinates of the coordinate data CD3a and CD3b, the processor 331P may be configured to calibrate the coordinates of the coordinate data CD3a and CD3b. The processor 331P may be configured to calibrate the coordinates of the coordinate data CD3a and CD3b based on lengths of the electrode sheets ES3, ES3a and ES3b between portions of the electrode sheets ES3a and ES3b wound by the rewinders 313a and 313b and a portion of the third electrode sheet ES3 sensed by the sensing part 331S, and to match the calibrated coordinates to the bit values of the NG marks NGM1, NGM2, NGM3, and NGM4 (see FIG. 3).

The processor 331P may be configured to transmit the mark sensing data MSD2 to the roll map controller 341. The roll map controller 341 may be configured to transmit the mark sensing data MSD2 to the process controller 343.

The controller 319 may be configured to control the tag attachers 317a and 317b based on the mark sensing data MSD2 but embodiments are not limited thereto. The controller 319 may be configured to control the tag attachers 317a and 317b, based on the mark sensing signal MSS2.

The controller 319 may be configured to generate commands TCDa and TDCb to control the tag attachers 317a and 317b based on the mark sensing data MSD2, and transmit the commands TCDa and TDCb to the tag attachers 317a and 317b. The controller 319 may be configured to transmit data about operations of the tag attachers 317a and 317b (i.e., data about the attachment of the NG tag) to the process controller 343 or the roll map controller 341.

The controller 319 may be configured to directly communicate with the NG mark sensor 331. That is, the controller 319 and the NG mark sensor 331 may be configured to communicate signals and data without relay of other elements (e.g., the roll map controller 341 and the process controller 343). A data network between the controller 319 and the NG mark sensor 331 may include various types of communication channels including unidirectional and bidirectional wired and wireless communications. For example, the data network between the controller 319 and the NG mark sensor 331 may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

According to example embodiments, when only some of the coated lanes of the electrode roll ER2 (see FIG. 3) include a defect, an NG tag may be attached to the separate electrode sheets ES3a and ES3b without scrapping the entire defective portion DES (see FIG. 4) of the electrode roll ER2 (see FIG. 3). Accordingly, when only some of coated lanes overlapping in the transverse direction TD (see FIG. 3) include a defect, only portions of the coated lanes including the defect may be selectively scrapped by the winding device 400 of FIG. 6 without scrapping the entire defective part DES of the second electrode sheet ES2, thereby increasing yield and productivity of a secondary battery manufacturing process.

The process controller 343 may be configured to transmit the mark sensing data MSD2, data about the operations of the tag attachers 317a and 317b (i.e., data about the attachment of the NG tag), and additional process event data to the server 1020 (see FIG. 1) via the EIF 1010 (see FIG. 1). The server 1020 (see FIG. 1) may be configured to generate a roll map of the electrode rolls ER3a and ER3b processed by the slitting device 300, based on the mark sensing data MSD2, the data about the operations of the tag attachers 317a and 317b (i.e., the data about the attachment of the NG tag), and the additional process event data.

FIG. 6 illustrates a winding device 400 according to example embodiments.

Referring to FIG. 6, the winding device 400 may include unwinders 411S1, 411P, 411S2, and 411N, a winder 413, a guide roll 415, a knife 417, first rotary encoders 421N and 421P, a second rotary encoder 423, NG tag sensors 431N and 431P, a roll map controller 441, and a process controller 443.

A separator roll SR1 may be loaded on the unwinder 411S1. An electrode roll ERP may be loaded on the unwinder 411P. A separator roll SR2 may be loaded on the unwinder 411S2. The electrode roll ERN may be loaded on the unwinder 411N.

Each of the electrode rolls ERP and ERN may be one of fourth electrode rolls ER4a and ER4b processed by the slitting device 300 and transferred to the winding device 400. Accordingly, each of the electrode rolls ERP and ERN may include NG tags attached by the slitting device 300 based on the NG marks NGM1, NGM2, NGM3, and NGM4 (see FIG. 3).

The unwinder 411S1 may be configured to unwind a separator sheet SS1 from the separator roll SR1. The unwinder 411P may be configured to unwind an electrode sheet ESP from the electrode roll ERP. The unwinder 411S2 may be configured to unwind a separator sheet SS2 from the separator roll SR2. The unwinder 411N may be configured to unwind an electrode sheet ESN from the electrode roll ERN. Each of the electrode sheets ESN and ESP may be referred to as a fourth electrode sheet.

The winder 413 may be configured to wind the separator sheet SS1, the electrode sheet ESP, the separator sheet SS2, and the electrode sheet ESN together. Accordingly, an electrode assembly EA of a secondary battery (e.g., a cylindrical secondary battery) may be provided. The electrode assembly EA may include a winding structure of the separator sheet SS1, the electrode sheet ESP, the separator sheet SS2, and the electrode sheet ESN. The separator sheet SS1, the electrode sheet ESP, the separator sheet SS2, and the electrode sheet ESN may join on the guide roll 415. The electrode sheet ESP and the electrode sheet ESN may be electrically isolated by the separator sheets SS1 and SS2. Accordingly, a short circuit between the electrode sheet ESP and the electrode sheet ESN may be prevented regardless of the winding of the separator sheet SS1, the electrode sheet ESP, the separator sheet SS2, and the electrode sheet ESN.

After target winding lengths of the separator sheet SS1, the electrode sheet ESP, the separator sheet SS2, and the electrode sheet ESN is reached, the knife 417 may cut the separator sheet SS1, the electrode sheet ESP, the separator sheet SS2, and the electrode sheet ESN to separate the electrode assembly EA. Accordingly, the completed electrode assembly EA may be exported to the outside. Through the operations of the unwinders 411N and 411P and the winder 413 described above, the electrode sheets ESN and ESP may be moved between the unwinders 411N and 411P and the winder 413.

The first rotary encoder 421P may be configured to sense an amount of the electrode sheet ESP unwound from the electrode roll ERP by the unwinder 411P. Accordingly, the first rotary encoder 421P may be configured to generate an input amount signal UWASP indicating a length of the electrode sheet ESP unwound by the unwinder 411P. The first rotary encoder 421P may be configured to transmit the input amount signal UWASP to the roll map controller 441.

The first rotary encoder 421N may be configured to sense an amount of the electrode sheet ESN unwound from the electrode roll ERN by the unwinder 411N. Accordingly, the first rotary encoder 421N may be configured to generate an input amount signal UWASN indicating a length of the electrode sheet ESN unwound by the unwinder 411N. The first rotary encoder 421N may be configured to transmit the input amount signal UWASN to the roll map controller 441.

According to example embodiments, the winding device 400 may further include additional rotary encoders configured to generate an input signal of each of the separator sheets SS1 and SS2.

The second rotary encoder 423 may be configured to sense an amount of the electrode sheets ESN and ESP wound into the electrode assembly EA by the winder 413. Accordingly, the second rotary encoder 423 may be configured to generate an exhaustion signal WAS4 indicating lengths of the electrode sheets ESN and ESP wound by the winder 413. The second rotary encoder 423 may be configured to transmit the exhaustion amount signal WAS4 to the roll map controller 441.

The roll map controller 441 may be configured to collect coordinate data of the electrode sheets ESP and ESN, based on the input amount signals UWASN and UWASP and the exhaust amount signals WASN and WAS3b of the electrode sheets ESN and ESP.

For example, the roll map controller 441 may determine moving distances of the electrode sheets ESN and ESP, based on the input amount signals UWASN and UWASP of the electrode sheets ESN and ESP. Accordingly, the roll map controller 441 may be configured to determine positions of portions of the electrode sheets ESN and ESP, which are to be unwound by the unwinders 411N and 411P, on the electrode sheets ESN and ESP at each point in time when an event occurs on the electrode sheets ESN and ESP. The event may include sensing an NG tag, completing the electrode assembly EA, and scrapping the electrode assembly EA that includes defects.

As another example, the roll map controller 441 may determine moving distances of the electrode sheets ESN and ESP, based on the exhaustion amount signal WAS4 of the electrode sheets ESN and ESP. Accordingly, the roll map controller 441 may be configured to determine positions of portions of the electrode sheets ESN and ESP, which are to be wound by the winder 413, on the electrode sheets ESN and ESP at each point in time when an event occurs on the electrode sheets ESN and ESP.

Hereinafter, as a non-limiting example, the technical idea of the present invention will be described with respect to an embodiment in which the roll map controller 441 collects coordinate data based on the exhaustion amount signal WAS4 of the electrode sheets ESP and ESN.

The coordinate data may include coordinates matching each portion of the electrode sheets ESP and ESN. That is, each of points on the electrode sheets ESP and ESN may match coordinates. The coordinates may be 1D quantities in a machine direction of the electrode sheets ESP and ESN but are not limited thereto. The coordinates may be 2D quantities in the machine direction and a Y-axis direction in a transverse direction of the separate electrode sheets ES3a and ES3b.

The NG tag sensor 431N may be configured to sense an NG tag on the electrode sheet ESN. According to example embodiments, the NG tag sensor 431N may be a color sensor. The NG tag sensor 431N may be configured to sense an NG tag to generate an NG tag sensing signal TSSN. The NG tag sensor 431N may be configured to transmit the NG tag sensing signal TSSN to the roll map controller 441.

The NG tag sensor 431P may be configured to sense an NG tag on the electrode sheet ESP. According to example embodiments, the NG tag sensor 431P may be a color sensor. The NG tag sensor 431P may be configured to sense an NG tag to generate an NG tag sensing signal TSSP. The NG tag sensor 431P may be configured to transmit the NG tag sensing signal TSSP to the roll map controller 441.

The roll map controller 441 may be configured to collect NG tag sensing data TSDN based on the NG tag sensing signal TSSN and collect NG tag sensing data TSDP based on the NG tag sensing signal TSSP.

The roll map controller 441 may be configured to calibrate coordinates of coordinate data and match the calibrated coordinates to the NG tag sensing signals TSSN and TSSP, based on lengths of the electrode sheets ESN and ESP between portions of the electrode sheets ESN and ESP wound by the winder 413 and portions of the electrode sheets ESN and ESP sensed by the NG tag sensors 431N and 431P.

The roll map controller 441 may be configured to transmit the NG tag sensing data TSDN and TSDP to the process controller 443. The process controller 443 may be configured to transmit the NG tag sensing data TSDN and TSDP and additional process event data to the server 1020 (see FIG. 1) via the EIF 1010 (see FIG. 1). The server 1020 (see FIG. 1) may be configured to generate a roll map of the electrode assembly EA processed by the winding device 400, based on the NG tag sensing data TSDN and TSDP and the additional process event data.

The process controller 443 may be configured to control operations of the unwinders 411N and 411P and the winder 413, based on the NG tag sensing data TSDN and TSDP. As a non-limiting example, the winding device 400 may include an additional controller to control the operations of the unwinders 411N and 411P and the winder 413 based on the NG sensing signals TSSN and TSSP.

For example, when a portion of the electrode sheet ESN to which the NG tag is attached is brought to close to the winder 413, the process controller 443 may be configured to generate a signal for controlling the unwinder 411P to stop the unwinding of the electrode sheet ESP. Accordingly, only a defective portion of the electrode sheet ESN may be wound without winding the electrode sheet ESP, and the electrode assembly EA that is defective may be scrapped after the winding of the defective portion of the electrode sheet ESN. Accordingly, an amount of the electrode sheet ESP to be scrapped when the defective portion of the electrode sheet ESN is scrapped may decrease.

As another example, when a portion of the electrode sheet ESP to which the NG tag is attached is brought to close to the winder 413, the process controller 443 may be configured to generate a signal for controlling the unwinder 411N to stop the unwinding of the electrode sheet ESN. Accordingly, only a defective portion of the electrode sheet ESP may be wound by a winder without winding the electrode sheet ESN. After the defective portion of the electrode sheet ESP is wound, the electrode assembly EA that is defective may be scrapped. Accordingly, an amount of the electrode sheet ESN to be scrapped when the defective portion of the electrode sheet ESP is scrapped may decrease.

Referring to FIGS. 1, 2, and 4 to 6, the controllers 119 and 319, the processors 131P, 231P, and 331P, the roll map controllers 141, 241, 341, and 441, the process controllers 143, 243, 343, and 443, the EIF 1010, and the server 1020 may be implemented by hardware, firmware, software, or a combination thereof. For example, the controllers 119 and 319, the processors 131P, 231P, and 331P, the roll map controllers 141, 241, 341, and 441, the process controllers 143, 243, 343, and 443, the EIF 1010, and the server 1020 may include computing devices such as workstation computers, desktop computers, laptop computers, and tablet computers. The controllers 119 and 319, the processors 131P, 231P, and 331P, the roll map controllers 141, 241, 341, and 441, the process controllers 143, 243, 343, and 443, the EIF 1010, and the server 1020 may each include one of a simple controller, a complex processor such as a microprocessor, a CPU, or a GPU, a processor configured by software, dedicated hardware, and firmware. The controllers 119 and 319, the processors 131P, 231P, and 331P, the roll map controllers 141, 241, 341, and 441, the process controllers 143, 243, 343, and 443, the EIF 1010, and the server 1020 may be implemented by general-purpose computers or applicationspecific hardware such as a digital signal processor (DSP), a field programmable gate array (FPGA) or an application specific integrated circuit (ASIC).

As a non-limiting example, the roll map controllers 141, 241, 341, and 441 and the process controllers 143, 243, 343, and 443 may be programmable logic controllers (PLCs). The PLC is a special type of microprocessor-based controller that stores instructions using a programmable memory and implements functions such as logic, sequencing, timing, counting and an arithmetic operation to control machines and processes. It is easy to operate and program the PLC.

The roll map controllers 141, 241, 341, and 441, and the process controllers 143, 243, 343, and 443 may include a power supply, a CPU, an input interface, an output interface, a communication interface, and memory devices. For the roll map controllers 141, 241, 341, and 441 and the process controllers 143, 243, 343, and 443, the power supply may be configured to supply power to other components, such as a CPU, an input interface, an output interface, a communication interface, and memory devices, other than the roll map controllers 141, 241, 341, and 441 and the process controllers 143, 243, 343, and 443. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to control communication between modules that implement logic and convert input signals into output operation signals. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to transmit and receive data between the roll map controllers 141, 241, 341, and 441 and the process controllers 143, 243, 343, and 443 or between the process controllers 143, 243, 343, and 443 and the EIF 1010.

The server 1020 may include a physical server or a cloud server. The server 1020 may provide data and an analysis result to an operator through various frameworks.
The framework may include protocols that support data transfer to provide updated visualizations when display device 1030 visualizes data through a user interface and new data is computed by server 1020. The protocol supporting data transmission may use HTML, JavaScript, and/or JSON.

The server 1020 may transmit a visualization command VC to the display device 1300, and the display device 1300 may visualize a roll map and display the visualized roll map.

The server 1020 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics include measured values generated in a time-series manner and may be used to monitor applications and generate a status warning.

The secondary battery manufacturing system 10 may implement a plug-in architecture with an API for obtaining data to provide a plug-and-play connection among a sensor, a measuring device, and an inspector. Accordingly, resources in a certain process step and a specific site can be easily transferred to different processes and different sites or new resources can be easily introduced into each process step and each site.

In some embodiments, the secondary battery manufacturing system 10 may further include a manual input system that allows an operator to input manufacturing data. The secondary battery manufacturing system 10 may allow a computer-based input of manufacturing data such as inputting data by an operator using an input tool and Excel file scraping. The manual input system may be, for example, human-machine interfaces (HMI) of supervisory control and data acquisition (SCADA). Generally, SCADA may include a combination of software and hardware, such as a PLC and remote terminal units (RTU). HMI is a screen that supports communication between an operator and an SCADA system and is a key element of the SCADA system. For example, manual input by HMI may include selecting a defective type and reflecting performance at the time of completion.

According to some embodiments, the operations of the controllers 119 and 319, the processors 131P, 231P, and 331P, the roll map controllers 141, 241, 341, and 441, the process controllers 143, 243, 343, and 443, the EIF 1010, and the server 1020 may be implemented as instructions stored in a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), a magnetic disk storage medium, an optical storage medium, a flash memory, electrical, optical, acoustic, or other types of radio signals (e.g., carrier waves, infrared signals, digital signals, etc.), and other signals.

The controllers 119 and 319, the processors 131P, 231P, and 331P, the roll map controllers 141, 241, 341, and 441, the process controllers 143, 243, 343, and 443, the EIF 1010, and the server 1020 may include firmware, software, routines, and instructions for performing the above-described operation or processes described below. For example, the controllers 119 and 319, the processors 131P, 231P, and 331P, the roll map controllers 141, 241, 341, and 441, the process controllers 143, 243, 343, and 443, the EIF 1010, and the server 1020 may be implemented in a memory.

### (Second Embodiment)

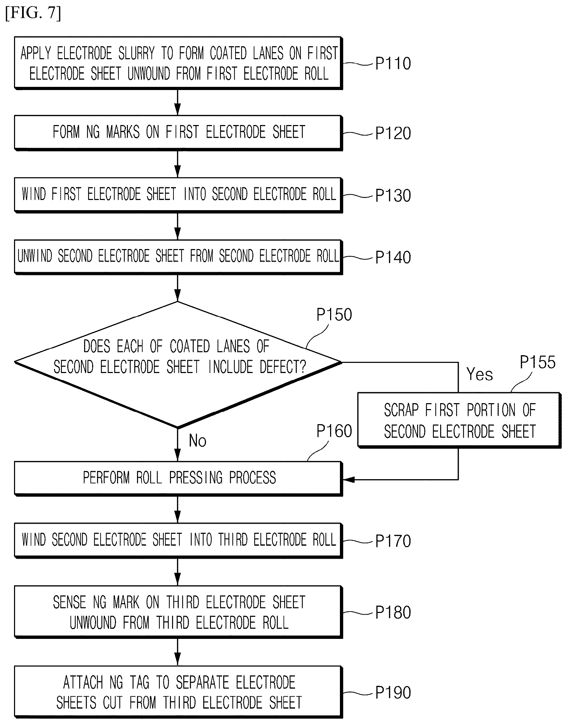

FIG. 7 is a flowchart of a secondary battery manufacturing method according to example embodiments.

Referring to FIGS. 2 and 7, in P110, the first electrode sheet ES1 unwound from the first electrode roll ER1 may be coated with an electrode slurry to form a plurality of coated lanes. The electrode slurry may be applied on the first electrode sheet ES1 by the die coater 115 of the coating device 100.

In FIGS. 2, 3, and 7, in P120, the NG marks NGM1, NGM2, NGM3 and NGM4 may be formed on the first electrode sheet ES1. The forming of the NG marks NGM1, NGM2, NGM3, and NGM4 may include collecting inspection data ID of the first electrode sheet ES1 and forming the NG marks NGM1, NGM2, NGM3, and NGM4 based on the inspection data ID. The inspection data ID may be collected by the inspector 131, and the NG marks NGM1, NGM2, NGM3, and NGM4 may be formed by the NG markers 117A, 117B, 117C, 117D, 117E, and 117F.

Next, in P130, the first electrode sheet ES1 may be wound into the second electrode roll ER2. The second electrode roll ER2 may be wound by the rewinder 113.

Referring to FIGS. 4 and 7, in P140, the second electrode sheet ES2 may be unwound from the second electrode roll ER2. To unwind the second electrode sheet ES2 from the second electrode roll ER2, the second electrode roll ER2 completed by the coating device 100 may be transferred to the roll pressing device 200 and loaded on the unwinder 211. The second electrode sheet ES2 may be unwound from the second electrode roll ER2 by the unwinder 211.

Next, in P150, whether each of a plurality of coated lanes of the second electrode sheet ES2 includes a defect may be determined. The determining of whether each of the plurality of coated lanes of the second electrode sheet ES2 includes a defect may include sensing the NG marks NGM1, NGM2, NGM3, and NGM4 (see FIG. 3) on the second electrode sheet ES2 to collect the mark sensing data MSD1.

The collecting of the mark sensing data MSD1 may include sensing the second electrode sheet ES2 to generate the mark sensing signal MSS1, calibrating coordinates of the coordinate data CD2, and matching the calibrated coordinates to the mark sensing signal MSS1. The collecting of the mark sensing data MSD1 may be performed by the NG mark sensor 231.

In P155, when it is determined in P150 that each of all coated lanes included in a first portion of the second electrode sheet ES2 includes a defect (YES), the first portion of the second electrode sheet ES2 may be scrapped. The first portion of the second electrode sheet ES2 may be scrapped by the scrap port 217 of the roll pressing device 200. In P160, after the first portion of the second electrode sheet ES2 is scrapped, the roll pressing process may be performed on the second electrode sheet ES2.

When it is determined in P150 that some of coated lanes included in a second portion of the second electrode sheet ES2 are normal (NO), the second portion of the second electrode sheet ES2 may not be scrapped by the roll pressing device 200, and in P160, the roll pressing process may be performed on the second portion of the second electrode sheet ES2. In P160, the roll pressing process may be performed by the pressing rolls 219.

Next, in P170, the second electrode sheet ES2 may be wound into the third electrode roll ER3. The third electrode roll ER3 may be wound by the rewinder 213
Referring to FIGS. 5 and 7, in P180, an NG mark on the third electrode sheet ES3 unwound from the third electrode roll ER3 may be sensed. To unwind the third electrode sheet ES3 from the third electrode roll ER3, the third electrode roll ER3 completed by the roll pressing device 200 may be transferred to the slitting device 300 and loaded on the unwinder 311. The third electrode sheet ES3 may be unwound from the third electrode roll ER3 by the unwinder 311.

The NG mark sensing signal MSS2 may be generated by sensing of the NG mark and the NG mark sensing data MSD2 may be collected. The NG mark sensing signal MSS2 may be generated by the sensing part 331S, and the NG mark sensing data MSD2 may be collected by the processor 331P.

Thereafter, in P190, an NG tag may be attached to the separate electrode sheets ES3a and ES3b cut from the third electrode sheet ES3. The third electrode sheet ES3 may be cut into the separate electrode sheets ES3a and ES3b by the slitting knife 315.

The NG tag attachers 317a and 317b may be configured to attach the NG tag to the separate electrode sheets ES3a and ES3b, based on the commands TCDa and TDCb from the controller 319. The controller 319 may be configured to generate the commands TCDa and TDCb based on the NG mark sensing signal MSS2 or the NG mark sensing data MSD2.

Portions of the separate electrode sheets ES3a and ES3b to which the NG tag is attached may be scrapped by the winding device 400 of FIG. 6. The scrapping of the portions of the electrode sheets ES3a and ES3b to which the NG tag is attached may include unwinding the electrode sheets ESN and ESP from the electrode rolls ERN and ERP loaded on the unwinders 411P and 411N of the winding device 400, sensing the NG tag on the electrode sheets ESN and ESP to generate the NG tag signals TSSN and TSSP, and scrapping portions of the electrode sheets ESN and ESP based on the NG sensing signals TSSN and TSSP or the NG sensing data TSDN and TSDP.

Accordingly, only the portions of the electrode sheets ESN and ESP that include defects can be selectively scrapped to increase the yield and productivity of the secondary battery manufacturing apparatus 10 (see FIG. 1) and the secondary battery manufacturing method.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing method comprising:
coating a first electrode sheet unwound from a first electrode roll with an electrode slurry to form a plurality of coated lanes;
inspecting the first electrode sheet to collect inspection data;
forming an NG mark on the first electrode sheet based on the inspection data; and
winding the first electrode sheet into a second electrode roll,
wherein the NG mark indicates a position of a defect on the first electrode sheet in a transverse direction of the first electrode sheet.

2. The secondary battery manufacturing method of claim 1, wherein the NG mark is two-dimensional (2D) barcode.

3. The secondary battery manufacturing method of claim 1, wherein the NG mark includes information about bits indicating coated lanes including the defect among the plurality of coated lanes and bits indicating a sequence in which the NG mark is formed.

4. The secondary battery manufacturing method of claim 1, wherein the first electrode sheet is a positive electrode current collector,
the electrode slurry includes a positive electrode active material, and
the NG mark is formed based on inspection of an insulation overlay of the first electrode sheet,
wherein the insulation overlay is an overlapping width of the positive electrode active material of the electrode slurry and an insulation layer applied to the positive electrode active material.

5. The secondary battery manufacturing method of claim 1, wherein the first electrode sheet includes a negative electrode current collector,
the electrode slurry includes a negative electrode active material, and
the NG mark is formed based on inspection of a slide of the first electrode sheet,
wherein the slide is a slope of a profile of the negative electrode active material on an edge of each of the plurality of coated lanes.

6. The secondary battery manufacturing method of claim 1, further comprising:
unwinding a second electrode sheet from the second electrode roll;
sensing the NG mark on the second electrode sheet; and
winding the second electrode sheet into a third electrode roll.

7. The secondary battery manufacturing method of claim 6, further comprising, when all of the plurality of coated lanes of a first portion of the second electrode sheet include the defect, scrapping the first portion of the second electrode sheet.

8. The secondary battery manufacturing method of claim 7, further comprising, when some of the plurality of coated lanes of a second portion of the second electrode sheet are normal, performing a roll pressing process on the second portion of the second electrode sheet.

9. The secondary battery manufacturing method of claim 6, further comprising:
unwinding a third electrode sheet from the third electrode roll;
sensing the NG mark on the third electrode sheet;
cutting the third electrode sheet into first and second separate electrode sheets;
attaching an NG tag to the first and second separate electrode sheets; and
winding the first and second separate electrode sheets into fourth electrode rolls.

10. The secondary battery manufacturing method of claim 9, further comprising:
loading one of the fourth electrode rolls on a winding device;
unwinding a fourth electrode sheet from one of the fourth electrode rolls; and
sensing an NG tag on the fourth electrode sheet to generate an NG sensing signal.

11. The secondary battery manufacturing method of claim 10, further comprising scrapping a portion of the fourth electrode sheet based on the NG sensing signal.

12. A slitting device comprising:
an unwinder configured to unwind an electrode sheet from an electrode roll;
an NG mark sensor configured to inspect an NG mark on the electrode sheet;
a slitting knife configured to cut the electrode sheet into a first separate electrode sheet including a first coated lane and a second separate electrode sheet including a second coated lane; and
NG tag attachers configured to attach an NG tag to the first and second separate electrode sheets.

13. The slitting device of claim 12, further comprising a controller configured to control the NG tag attachers,
wherein the controller is configured to communicate directly with the NG mark sensor.

14. The slitting device of claim 13, wherein the NG mark sensor comprises:
a sensing part configured to sense the NG mark to generate an NG mark sensing signal; and
a processor configured to collect NG mark sensing data based on the NG mark sensing signal.

15. The slitting device of claim 14, wherein the controller is configured to control the NG tag attachers based on the NG mark sensing data.
